# EUROPEAN PATENT SPECIFICATION

(11) **EP 4 117 889 B1**
(45) Date of publication and mention of the grant of the patent: **31.07.2024**
(21) Application number: 22705807.0
(22) Date of filing: 15.02.2022
(51) Int. Cl.: B29C 51/26, B29C 51/44, B29C 51/06, B05C 1/00, B65B 3/02, B29K 105/00, B29L 31/00

(54) **INTEGRATED THERMOFORMER ADHESIVE COATING SYSTEM**
INTEGRIERTES THERMOFORMENDES HAFTBESCHICHTUNGSSYSTEM
SYSTÈME DE REVÊTEMENT ADHÉSIF THERMOCOLLANT INTÉGRÉ

(30) Priority: 26.02.2021 GB 202102802
(43) Date of publication of application: 18.01.2023
(73) Proprietor: Mannok Pack Limited, Ballyconnell, Co. Cavan (IE); Costruzioni Meccaniche Fin Srl, 50052 Certaldo (FI) (IT)
(72) Inventor: MCCAFFREY, Thomas, Ballyconnell, Co. Cavan (IE); TREWHITT, Phil, 50052 Certaldo (IT)
(74) Representative: Murgitroyd & Company
(86) International application number: PCT/EP2022/053712
(87) International publication number: WO 2022/179892

(56) References cited:
- EP-A1- 3 683 168
- EP-A1- 3 695 964
- EP-B1- 0 435 949
- EP-B1- 1 275 580
- WO-A1-2020/212933
- CA-C- 1 311 198
- DE-B- 1 208 614
- JP-A- S5 889 318
- US-A- 3 387 427

## Description

### Field

The present application relates to plastic packaging and more particularly to methods and apparatus for thermoforming plastic packaging containers with adhesive applied onto a rim of the finished container.

### Background

It is well known in the food industry to provide sealed containers within which a foodstuff is retained prior to purchase by an end consumer. These containers typically comprise a tray or container within which the foodstuff is placed and a sealing film which is then subsequently applied to a top surface of the tray to form the sealed container. The sealing film may be secured in a variety of different ways to the tray, through the use for example of an adhesive or for example through a heat-sealing process.

It is known to manufacture the tray and the sealing film from a variety of plastics. For example, Polyethylene Terephthalate (PET) is commonly used and within the art it is known to use amorphous PET (APET) containers where there is desire for visibility of the product within the tray. It is also known to use crystalline PET (CPET) where there is a desire for the product to be used in a heat and eat application. Polypropylene (PP) is another common material for this use in manufacture of trays and as will be understood by those of ordinary skill it is also known to form sealing films from polyethylene, (PE). It is also known to form sealing films from PET with either co-extruded or laminated PE. Further examples of sealing films include those formed in a multi-layer structure comprising for example polyethylene/ Ethylene vinyl alcohol/ polyamide (PE/EVOH/PA). In such multilayer films, it is the stronger higher melting point polymers PET and PA that give the film it's structural integrity and the PE that provides the sealing functionality.

Known plastics trays come in a variety of shapes and sizes. Where used for a food product such as minced meat, the base and side walls of the tray will typically define a single receiving volume within the meat is placed and then a sealing film is used to seal the environment around the meat.

For other meat products such as burgers which are provided in a defined shape and where there is a desire for that shape to be retained until use, it is known to provide a contoured interior volume of the tray with individual regions of the receiving volume being dimensioned to receive individual burgers.

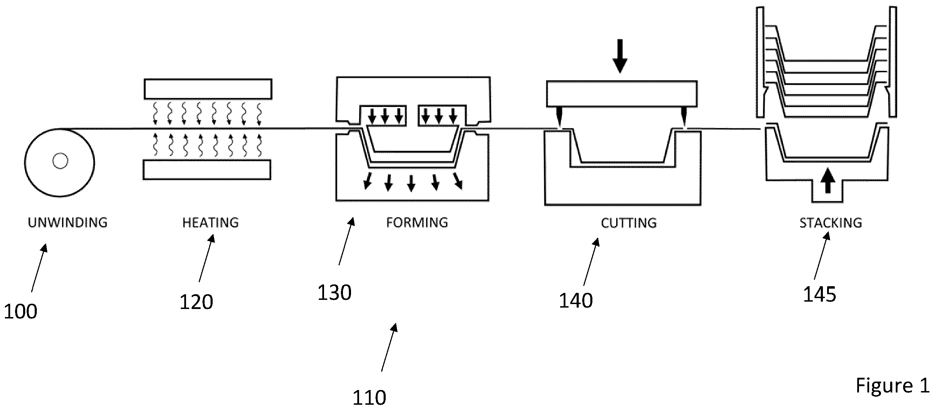

Irrespective of the ultimate shape of the finished container, it is known to fabricate these containers using a thermoforming process that utilizes thermoforming machinery. The plastic material that is used to fabricate the final product is typically provided in rolls, but may also be fed directly from an extrusion process. Typically plastic containers that are used in the food industry are fabricated from one or more individual layers and these are provided on a single roll that has been co-extruded to have multiple plies already formed. For the sake of simplicity Figure 1 shows an example of a conventional thermoforming process that uses a single roll of plastic sheet as an input to the process. It will be understood that this can be provided as a single ply or a multi-ply sheet.

When required the sheet is loaded onto an automatic unwinder 100 which feeds it into the thermoforming machine, the thermoformer 110, at a rate consistent with the throughput of the process. The sheet is conveyed through the thermoformer by means of chains running within a set of mainly parallel rails. The chains have spikes that pierce the sheet to maintain a firm grip of it as it's conveyed through the machine. It will be appreciated that other arrangements will grip the sheet using grippers as opposed to piercing the sheet.

On entering the thermoformer 110 the sheet first passes through a series of heaters 120 that brings the material from ambient up to the optimal processing temperature. Depending on the individual product type being formed this processing temperature is typically maintained at 115°C to 160°C or preferably 125°C to 150°C or most preferably between 135°C to 145°C. This sheet temperature is measured by means of an automatic pyrometer readout taken just before it enters the mould.

As above, once the sheet has reached its optimal forming temperature it is indexed into an open thermoforming mould 130. Once stationary, the mould closes and vacuum is applied to the lower half of the mould to remove the air from the mould cavities. Almost instantaneously, the upper half of the mould is pressurised with forming air ranging in pressure from 3 bar (3 X 10 ⁵ Pa) to 8 bar (8 X 10 ⁵ Pa). Desirably a process pressure of 6 bar (6 X 10 ⁵ Pa)_to 8 bar (8 X 10 ⁵ Pa) is optimum. In cases where the formed tray is intended to be deeper than 45mm or complex in shape, such as a burger tray or multi-compartment tray, a plug assist may commonly be used to aid the plastic movement of the material into the complex shapes of the mould cavity.

As the thermoforming mould is typically chilled to a temperature ranging from 5° to 40°C the formed part will quickly cool and set into the predefined shape of the mould cavity. Following a short stationary period where the material cools and hardens, the mould opens and the sheet indexes forward, moving more, hot, ready to form sheet into the mould and the now formed sheet out of the mould. This process continues until the formed sheet reaches the cutting station 140.

The cutting station can be provided as an inline component of the thermoforming machine and Figure 1 shows such an example where the cutting station 140 is situated within the thermoforming machine. A series of hot steel knifes locate around the rim of the tray and with mechanical force cut through the plastic against a hardened anvil. At a number of points, typically 4, around the rim there is a gap in the steel knife so that an un-cut tab remains. These tabs ensure the tray is still connected to the skeletal waste, the area of unformed sheet between each formed tray, as it indexes through the thermoformer to the stacking station 145.

In other arrangements, the formed sheet can be transported to a separate cutting station outside of the main thermoformer 100. This type of station may be referred to as a cutting press or trim press, and normally stacking is completed at the same time as cutting.

In the stacking station 145, the trays are pushed from the skeletal into a basket known as a catcher. The pusher breaks the small tabs is it pushes the trays from the skeletal material in the catching basket. A/B, A/B/C, A/B/C/D and conventional staking arrangements can be used, depending on the size of the finished tray and the number and orientation of the trays in the mould. The waste is separated from the trays and typically chopped into flakes and reused in the extrusion process.

Finished stacks of trays are then bagged or auto-sleeved before being palletised and stored ready for shipping to the end customer. These finished trays will adopt a standardised shape of having a base with side walls extending upwardly from the base and terminating in a sealing flange against which a sealing film may be operatively placed. This sealing film may be secured to the flanged by a heat-sealing process, which has traditionally required the use of a PE laminate on the uppermost tray surface and against which a PE film may be operatively heat sealed.

In other more recent approaches, the sealing may be provided by providing a bead or layer of adhesive on the sealing flange and then using that adhesive to adhere to a sealing film that is placed in contact with that adhesive coated flange.

To date, the application of the bead or layer of adhesive on the sealing flange is achieved after the formed trays have left the thermoforming machine. One example uses a plurality of separate machines that do not use a common drive mechanism: a first machine includes heating and forming components, a second machine provides adhesive application components, and a third machine includes a cutting function. Each of the three machines have their own independent drive mechanism such that the speed of transport of containers through any one machine is independent of the speed of transport of containers through another machine. This is important in the context of this type of known machine process in that the speed that is needed for thermoforming can be different to that which is used in the cutting machine. In the event that the sheet passes from one machine to the next machine, the sheet is looped to allow the introduction of slack into the sheet as it is being transferred from one machine to another to allow the transfer of control of transport of the sheet from a drive mechanism of a first machine to the independent drive mechanism of a second machine.

In another example this is effected in an offline process using a separate adhesive coating machine. This has necessitated for example, the transportation of the stacked trays from the output of the thermoforming machine to a separate un-stacker where they are individually then passed through an adhesive coating process which typically employs a heated roller mechanism in order to apply the adhesive onto the flange. Examples of the type of adhesive coating that can be used include:
Method 1 - Recirculated hot media (Typically Thermal Oil, can also be water under pressure). The media is heated externally to the coater and recirculated through the centre of the coating roller to heat the roller from the inside. A high temperature hydraulic rotating joint is used to circulating the oil through the rotating roller.
Method 2 - Dead end oil heating. The heater for the oil remains inside the roller. A heater element in the centre of the roller heats the oil. There is an expansion tank situated outside of the roller for oil expansion during heating and a rotating joint to provide power and temperature sensor signals between the roller and the heat controlling unit.
Method 3 - Cartridge heating of the roller using a heater element in direct contact with the core of the roller. A rotating joint to provide power and temperature sensor signals between the roller and the heat controlling unit.
Method 4 - Surface heating of an insulated roller with a directional heating element such as Short wave Infra-red.

Each of these known approaches require a dedicated machine based on inherent requirements of the roller mechanisms employed including the overall space required to effect use of these conventional roller mechanisms, restrictions based on coating widths, the need for easy and fast roller coater changeover for different tray coating widths, and concerns about the speeds at which the roller needs to operate.

Whilst it would appear sensible to try and integrate the adhesive coating station into the thermoformer before the stacking station, the above practicalities associated with the roller technologies available have to date prevented such integration. There are further challenges associated with any integration including the fact that plastics material experience a shrinkage immediately after it has been undergone a moulding process. This shrinkage is dependent on many factors such as, sheet temperature, thermoforming tool temperature, tool cooling efficiency, sheet thickness, sheet material and recipe components, ambient temperature, water temperature and time to mention just a few. It is particularly relevant when it is considered to coat a freshly produced formed index of trays with adhesive and the variation in tray to tray pitch in the X and Y directions means that accurate location of the flange onto which the adhesive is to be applied is challenging.

JP S5889318 describes a system for use in the application of adhesive to flange contact surfaces of a plurality of thermoformed containers. US 3387427 describes containers having heat activable adhesive provided on their flanges. CA 1311198 describes a thermoforming process for making containers. EP 1275580 describes a method and machine for thermoforming, filling, and closing containers with an undercut.

### Summary

These and other problems are addressed by the present invention which includes an inline adhesive coating station within the thermoforming process and machine. Accordingly, a first embodiment of the application provides a thermoforming machine as defined in claim 1. Advantageous embodiments are provided in the dependent claims.

### Brief Description Of The Drawings

The present application will now be described with reference to the accompanying drawings in which:
Figure 1 is a schematic showing individual stations within a thermoforming machine in accordance with the known art.
Figure 2 is an illustrative schematic showing three sets of containers each located within a sheet of thermoplastic material, each set of containers defining a separate index of containers, each index being located within a separate station of a thermoforming machine in accordance with the present teaching.
Figure 3 is a schematic showing an index space between each of the indexed sets of containers shown in Figure 2.
Figure 4 is a schematic view from a view point perpendicular to the direction of travel of the container, the view showing use of a continuous drive mechanism to engage with the sheet of thermoplastic material at first and second sides thereof, the continuous drive mechanism being configured to transport an engaged sheet of thermoplastic material through the thermoforming machine;
Figure 5 is a schematic showing a type of container that can be advantageously formed using the thermoforming machine of the present teaching;
Figure 6 shows is a schematic showing individual stations within a thermoforming machine in accordance with the present teaching;
Figure 7 is a schematic showing a portion of the thermoforming machine of Figure 6 with details of an inline adhesive application station per the present teaching;
Figures 8A and 8B show relative positions of a counter pressure tool in the process of engaging with a container per the present teaching;
Figure 9 shows an adhesive roller in contact with a supported container in accordance with the present teaching;
Figure 10 is a schematic side view of components of a thermoforming machine within the context of the present teaching;
Figure 11 is an example of an adhesive applicator head incorporating a single roller in accordance with the present teaching;
Figures 12 to 14 show an adhesive applicator head incorporating a dual roller configuration in a plurality of operating configurations in accordance with the present teaching.

### Detailed Description Of The Drawings

The present teaching will now be discussed with reference to specific examples which are useful for an understanding of the present teaching. A polymer material in the form of one or more layers is provided as a continuous sheet, in the exemplary arrangements a sheet formed from layers of PET, is provided to a thermoforming machine comprising a plurality of modules which are arranged relative to one another. The sheet is transported through each of the modules (and exposed to ther respective processes) all within a common inline processs whereby the sheet is continuously maintained on one common plane and held inside the same machine using a guided drive system from the beginning to end of the processing. Within the inline process, the present invention provides a system whereby the sheet undergoes thermoforming, adhesive coating, padding (where required), cutting of trays from the sheet, stacking of trays and removal of trimmed sheet from the line all without leaving the same process line.

For the ease of explanation a number of terms will be used within the present specificaiton and the following provides a list of definitions as understood herein:

### Definition: Continuous coating on a common plane.

The sheet is transported through the processes namely,Thermoforming, Adhesive coating, Padding (where required), Cutting of trays from the Sheet, stacking of trays and removal of trimmed sheet from the line all on one common plane held inside the same equipment. The material is held at all times throughout the processes in a guided drive system from beginning to end of the processing. It will be appreciated that common functionality within any one thermoforming machine incldue the above individual stations but other stations such as hole punching and inspection stations may also be employed. For that reasons the present teaching should not be costrained to the make up of any one specific combination of stations except as deemed necessary in the light of the claims that follow.

### Definition: Indexing.

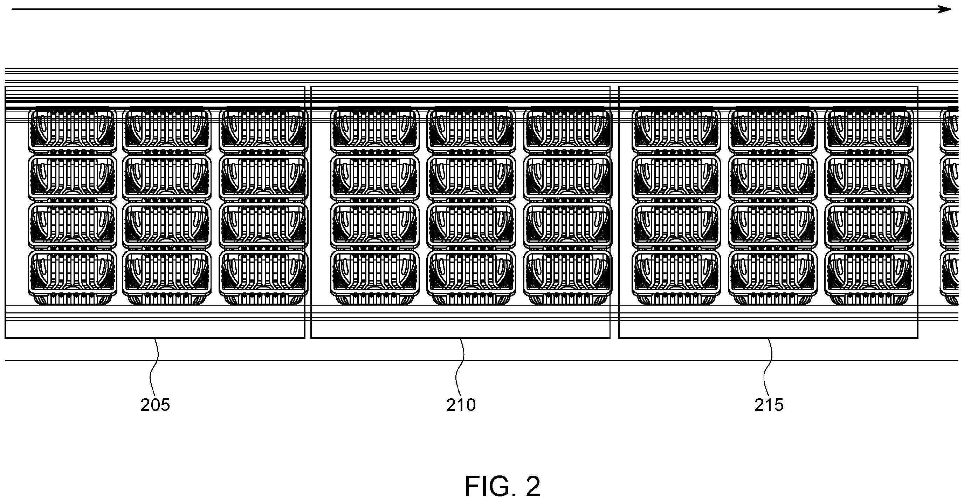

The process line is optimised to work in a synchronised manner where all processes of the product work in unison. The sheet is indexed, which means that it is moved forward through the line in controlled steps. Using the example of Figure 2, three separate indices (205, 210, 215) are shown with each index (205, 210, 215) consisting of 3 (length) x 4 (width). It will be understood that the schematic is illustrative of a process that moves from left to right following the direction of the arrow. It will also be understood from this illustrative example that normally there are multiple indexes between each station, i.e. the stations are spaced apart from one another such that an index does not pass directly from one station to the next but rather travels between the stations. It will be appreciated that the number of distinct indices that are located between individual stations will be dependent on mould size and thermoformer length.

The trays within each index are all exposed to the same process module at the same time. For example, the trays in index 215 have already undergone the process steps that each of trays 205 and 210 are currently experiencing. Assuming that the first step is a heating step within a heating module, and the second is a thermoforming step within a thermoforming module, then the trays within index 205 are being heated at the same time as the trays within the index 210 are being thermoformed. Again, and referring to the above, it will be understood that one or more indexes of trays may be provided between stations dependent on the nature of the mould and the length of the thermoforming machine. The index speed is maximised for the thermoforming process to take place and for maximum productivity. As an example, the thermoforming process may take 1.5 seconds with an index forward time of 0.5 seconds. Therefore, all subsequent processes that require the product to be static must therefore be carried out in the dwell time between indexing, in this example during the 1.5 second window between indexing.

For safety purposes it will be appreciated that there is advantageously a communication between all stations that will not allow the indexing to progress until all stations have completed their activity.

### Definition: Index Space.

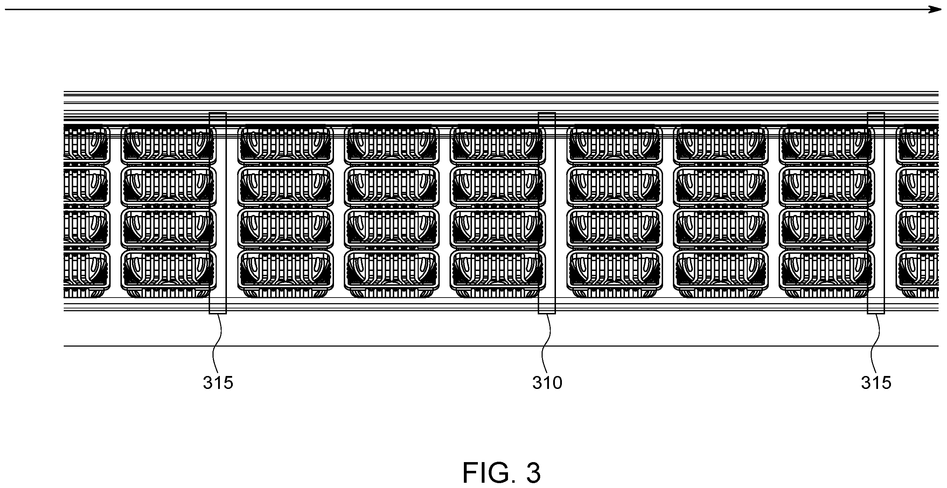

In between each index there is a distance different to that between the trays thermoformed together. This is illustrated in the schematic of Figure 3 as being the spaces 305, 310, 315 each being provided between the respective sets of trays that are within anyone index of trays. It is important to not overlap indexes in any processing of the thermoformed trays.

### Definition: Coating Width.

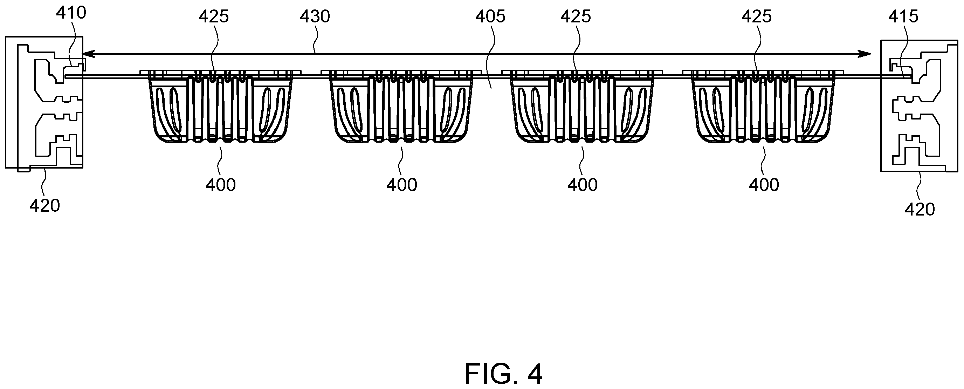

The height of the lip or flange to be coated of the formed trays sits below the height of the grasping units 420 providied by the transmission system of sheet transport system used to transport the material throughout the equipment. As a result the adhesive coating process must be able to work inside the width of the sheet transport system. In the example of Figure 4 which is a view along the length of the process line four trays 400 are each moving within the process whilst being retained on the same sheet 405 that is being retained at its sides 410, 415 by the grasping units 420. The flanges 425 to be coated by an adhesive coating machine are defined within the space defined between each of the two grasping units 420 and the distance 430 between the grasping units defines the coating width. It will be apreciated that the width of sheet and therefore the trays to be coated is variable.

### Definition: Tray Lip or Flange to be coated.

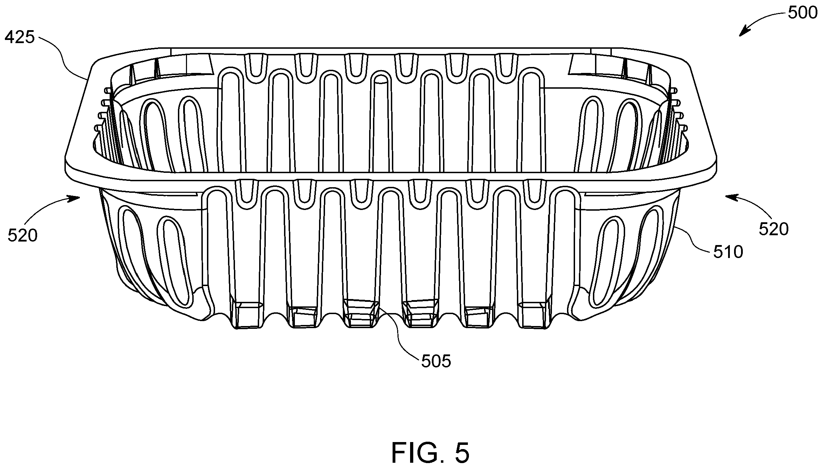

Figure 5 shows an example of a formed tray 500, with a base 505, side walls and a lip or flange 425 that represents the area of the tray where the adhesive is to be applied.

### Definition: Tray Lip counter pressure support.

As will be discussed in more detail below, the present invention advantageously employs a counter pressure system that supports the individual trays to provide a counter pressure between the adhesive coating roller and the part to ensure a full surface coverage of the Tray Lip. This is advantageously the region 520 below the flange 425 of Figure 5. It will be appreciated that the function of the counter pressure system is to provide a support for the flange or tray lip during the application of adhesive.

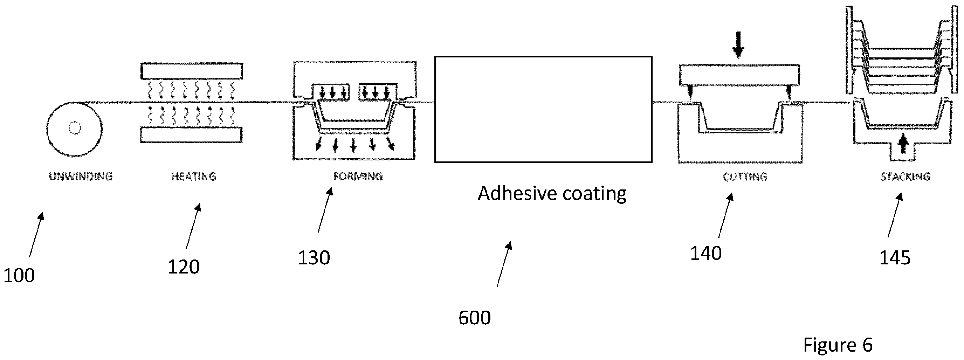

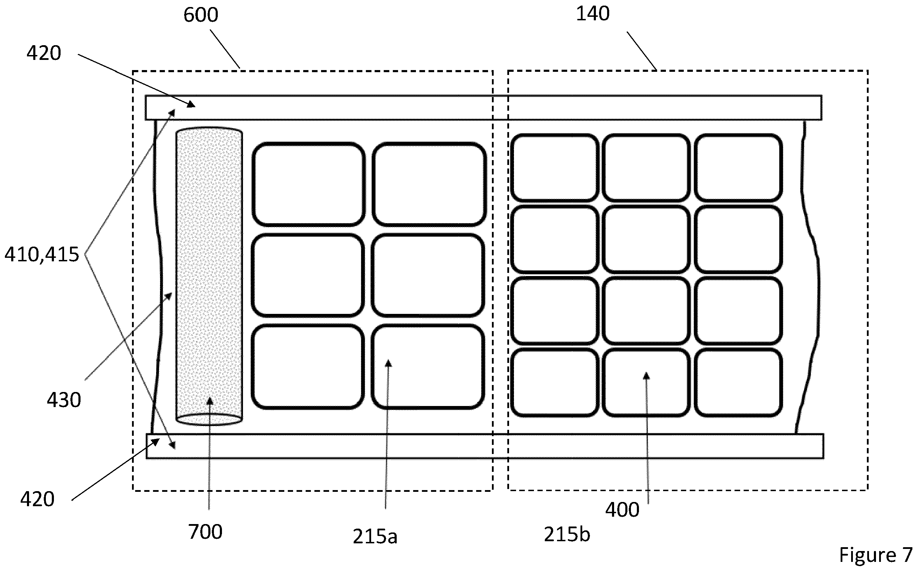

Figures 6 and 7 show in schematic form, a thermoforming system that incorporates an adhesive application station 600 as a distinct module within the thermoforming process. It will be appreciated from the disussion regarding Figure 1, that conventional thermoforming machines incorporate functional modules such as an unwinding station 100, a heating module 120, a forming station 130, a cutting station 140 and a stacking station 145. In addition to these stations, the present teaching provides the adhesive coating station 600 through which the plastic sheet material 430 also travels. These figures show an exemplary arrangement for locating the adhesive coating machine but it will be appreciated that other configurations or arrangements can equally be found useful. For example, in the event that a thermoforming system incorporating in-mould cut is envisaged, the adhesive coating could be provided between the forming and stacking stations. To that end, the specifics of where the adhesive station, and other stations, are described herein should not be considered limiting. At all times during the transportation of the sheet within the integrated inline thermoforming machine, the sheet is held at its respective sides 410, 415 using grasping units 420 of the guided drive system. The adhesive coating station 600 can be provided after the thermoforming station 130 and prior to the cutting station 140. In this way an index 215 of trays which have been theromoformed but not yet cut away from the base plastic sheet can have adhesive applied to their rim or flange portion whilst still within the in-line thermoforming system. As detailed above, the adhesive coating station could also be provided after a co-located forming and cutting station. In such a configuration, the index 215 of trays will still be within the in-line thermoforming system.

It will be understood that the exemplary embodiment described herein provides the adhesive station before the cutting station. In this specific configuration, given the location of the adhesive coating machine before the cutting station, it is important that the adhesive that has been applied to the flange of the container has sufficiently cured prior to the cutting station to ensure that during the cutting process that the adhesive on the containers does not compromise the cutting process. For that reason, the selection of adhesive is important within the context of an inline thermoforming machine per the present teaching. It will be appreciated however that if the adhesive station is provided elsewhere within the overall system, that this curing is not as important.

Within this context the present inventors have identified that a hot melt adhesive comprising a mixture of synthetic resins, ethylene copolymer and waxes which provides a soft, non-sticky, elastic adhesive on application is particularly advantageous. Given the importance that the adhesive applied in the adhesive coating station must not contaminate tooling or the processes of downstream processing within the integrated thermoforming machine, it has been identified that advantageously the adhesive should exhibit little to no tackiness within 2 seconds of application. This is particularly important per the present teaching as trays coated with adhesive are cut from the sheet very soon after adhesive application.

An adhesive that meets the following criteria is found to be particularly advantageous for the purposes of the present teaching.
1. The adhesive must be suitable to application by means of roller.
2. The adhesive has a melting temperature of 100°C - 110°C.
3. An application temperature of 145°C has been found to be optimal whilst application temperatures in the range of 130°C - 170°C are also possible.
4. The adhesive must have a low tendency to stringing behaviour.
5. The adhesive must not drip from the roller-coater whilst stationary or during liner motion.
6. The ideal viscosity has been found to be 2500 - 2500 mPa.s (at 175°C).
7. The adhesive must have a high adhesion to PET.

In use, the plastic sheet (or foil) 430 is provided to the thermoforming line either directly from an Extruder or in pre-produced rolls. The sheet is firmly gripped by the common chain-rails of the guided drive system of the thermofomer. The sheet 430 is heated to an operating temperature as it indexes through the oven provided by the heating station 120 and is then formed into the desired shape by the tool in the forming station 130. After a short cooling stage, the mould opens, and the sheet 430 continues to be transported through the thermofomer by the chain rails of the common drive system. The formed trays, whilst still being retained within the sheet, enter the Adhesive Coating Station 600 situated within the Thermoforming Machine 110.

Given that the sheet is still retained it is necessary for all processes to be conducted in a synchronised fashion.

As shown in Figure 7, within the adhesive coating station 600, a moveable roller 700 can be moved relative to the retained index of identifiable trays and can be used to selectively apply adhesive to their respective flanges. It will be appreciated from the above discussion on indexing that, as the plastic sheeting is being moved through the sytem using a common guided drive system, the time that any one index of trays is stationary within any one station is related to the time that another index within a processing station either before or after the instant index is also stationary. Given the example above where the thermoforming process may take 1.5 seconds with an index forward time of 0.5 seconds, it will be understood that within the adhesive application station that there is a window of 1.5 seconds within which adhesive must be applied to the flanges of all identifiable trays within that index.

It will be further appreciated that, given the trays have just exited a thermoforming mould, they have undergone a deformation process which can affect their material properties. In this context, plastic material shrinkage after forming can have a material effect on the actual location of the individual trays within their respective index, and can be dependent on many factors such as: sheet temperature, thermoforming tool temperature, tool cooling efficiency, sheet thickness, sheet material and recipe components, ambient temperature, water temperature and time, to mention just a few.

This is particularly relevant when it is considered that the function of the adhesive coating station is to selectively coat flanges of individual trays within a freshly produced formed index of trays with adhesive. With a limited time within which to locate the trays and to apply the adhesive, and given there is an anticipated variation in tray to tray pitch in the X and Y directions, the present inventors have identified that positively presenting the surfaces of the flange of the trays to the roller can effectively address these issues and concurrently present a supported surface at a specific location against which an adhesive roller can apply adhesive accurately and efficiently.

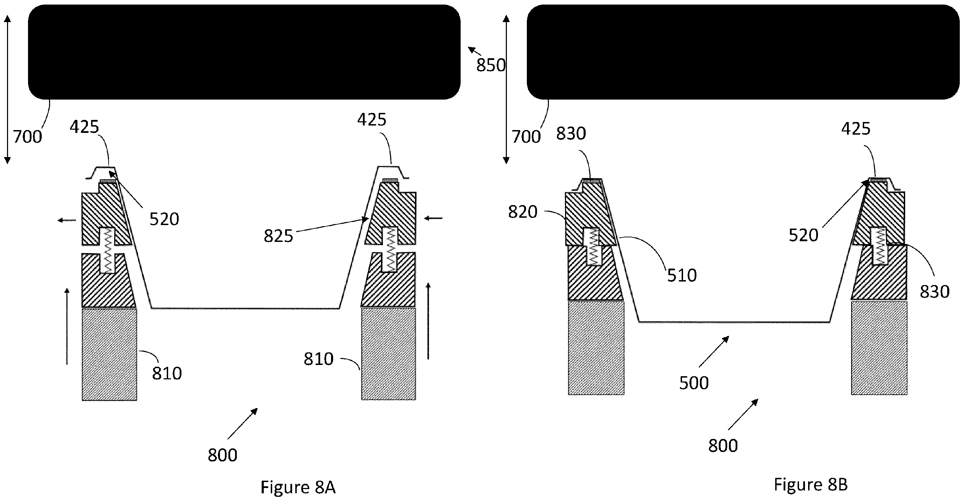

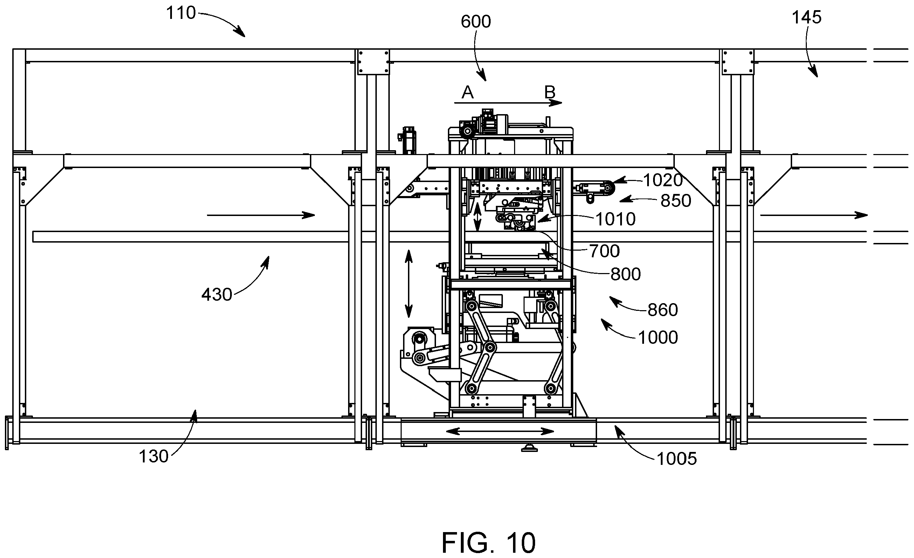

Figure 8 shows an example of a counter pressure tool 800 that is employed within the adhesive coating station 600 in accordance with the present teaching. The counter pressure tool is provided in a lower station 860 - shown in Figure 10- within the adhesive application module 600.

The example of Figure 8 is of a single tool that is supporting a single tray 500. It will be appreciated that each tray within a set of trays that are defined for any one particular index of trays will require individual support by a respective tool. For example, in the example of Figure 7 a first mould produces an index 215a that has 6 trays that will require support whereas a second alternative mould of different size produces an index 215b that has 8 trays that will require support. It will be appreciated that this schematic is purely illustrative of the type of differences that can be found using different moulds. For any one particular thermoforming process, the tray configuration within each index will typically be the same as each index of trays is formed by exposing the same sheet to the same mould within the forming station.

Each tray is associated with a separate counter-pressure tool which is configured to support the tray from beneath during coating. The tool is configured to both support the trays correctly and also to adapt to changes in material shrinkage that affect tray size and tray-to-tray pitch within the index. Figure 8A shows the tool in an open, non-supporting, configuration. Figure 8B shows the same tool in a closed, supporting configuration. It will be appreciated that each individual tray within the index that is currently being coated will have an associated counter pressure tool such that each tray is independently supported during the application of adhesive.

As shown in Figure 8, each counter pressure tool is associated with a corresponding tray 510. The counter-pressure tool comprises a series of pitch plates 810, so named as they are free to move in the X and Y plane to accommodate lateral variations in the location of the trays within any one index of a plurality of trays. It will be appreciated that the degree of movement may vary depending on the specifics of the machinery being used by variations in up to about 5mm are typical and can be accommodated by having the pitch plates mounted on a translating mount that facilitates changes in their orientation in both X and Y axes. The change in orientation of the pitch plates 810 is one functional benefit of the counter pressure tool 800.

Another functional benefit is provided by a biased counter pressure plates 820 that are coupled to the pitch plates 810. Each of these counter pressure plates are desirably matched in dimension to the tray 510 being coated. It will be appreciated that different trays have different dimensions and, to ensure that each tray is supported properly, the counter pressure tool desirably includes counter pressure plates that are dimensioned to support a corresponding tray. Changes in dimensions that may need to be accommodated include distance across the top of a tray, the height of side walls, angular orientation of side walls, and the width of the top flange. To facilitate use with different dimensioned trays, in one aspect of the present teaching, the counter pressure tooling is interchangeable for different tray shapes and sizes. It will be appreciated that trays of the same footprint (top-out), from the same master tool with the same number of cavities and tray to tray pitch may be able to run on the same counter pressure tooling.

The counter pressure tool is configured to move in a Y axis so as to allow selective engagement with an index of trays that are moved into the adhesive application station. Given that the adhesive is to be applied to a top flange surface 425 it is important that the region 520 under that flange is supported and this is achieved by having the counter pressure tool moveable up from beneath the index of trays that has been presented into the adhesive coating station. Once the sheet of material has moved into the station, the counter pressure tool can then be moved upwardly from below that sheet to support the stationary index of already formed trays defined within the sheet. As the counter pressure plates are dimensioned to match with the trays being supported, as the tool moves upwardly, counter pressure plate side walls 825 contact the tray side walls and continued movement upwards biases the tray to adopt a seated configuration where the regions 520 are each supported on an upper surface contact surface 830 of the counter pressure plate.

In this way the counter pressure plates 820 locate accurately around the tray sidewall 510 and underneath the tray rim 425. As the plates are resiliently biased through the use, for example, of a spring mounting 830, the force of the tooling locating against the underside of the trays closes the small gap created by the springs and ensures a firm supporting surface during coating, as seen in Figure 8B.

It will be appreciated that a spring mounting is one way of positively biasing the counter pressure plates relative to the tray, other arrangements could include:
- Air cushions
- Bearings
- Graphite
- Or any other means of providing free movement and firm pressure.

In this embodiment, the upper contact surface 830 of the counter pressure plates incorporates a rubber layer. This provides firm support, but also a little give or a resilient seating arrangement which helps to deal with cycle to cycle, index to index changes in sheet (foil) thicknesses. In another embodiment of the invention, the supporting surface is formed from aluminium. Other embodiments may be metals of any suitable type, plastic, wood, foam or any other material that will support the tray and provide a firm counter pressure during adhesive application

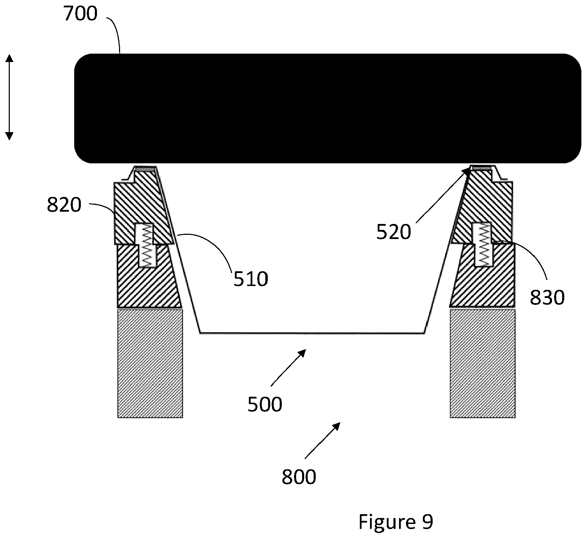

As shown in Figures 8 and 9, once the sheet is stationary the counter pressure tooling 800 moves upwardly to locate and support the formed trays 500 from below. As shown in Figure 10, the counter pressure tool is desirably provided as a component of a lower station 860 of the adhesive applicator 1000 that is located within the adhesive coating station 600. At the same time, which may be simultaneously, an upper station 850, of the same applicator 1000, which comprises a roller coater 700 moves down to make contact with the top of the sealing rim 425-Figure 9- of the formed trays 500.

In the example of Figure 8, the roller coater 700 is in a non-adhesive coating location - it being spaced away from the top surface 425 of the tray 500. In the example of Figure 9, the roller coater is moved to the adhesive coating location where adhesive can be dispensed from the roller onto the flange 425. Having made contact, and as will be understood also by reference to Figure 7, the roller coater 700 can be moved across all trays within the index 215 in a linear motion to coat the entire index of trays with adhesive. Having coated the trays during a single pass across the trays, the roller coater then retracts upwardly. The counter pressure tool similarly retracts downwardly to allow the sheet to be indexed to the next station.

It will be appreciated from inspection of Figures 4 and 7, that within the adhesive coating station, the indexed trays are supported by the sheet 430 which is gripped at its respective sides 410, 415 by chain rails 420. Whilst the counter pressure tool has moved upwardly from under the indexed trays to support the flanges onto which adhesive is to be applied, the engagement of the counter pressure tool with its respective tray does not effect a projection of the top flange 425 over the height of the grasping units 420. As detailed above, the height of the lip or flange to be coated of the formed trays sits below the height of the grasping units 420 provided by the transmission system of the sheet transport system used to transport the material throughout the thermoforming machine 110. As a result the adhesive coating process must be able to work inside the width of the sheet transport system.

Figure 7 shows how the adhesive coating roller coater 700 which is mounted on an adhesive applicator head (which will be discussed in more detail below) is dimensioned so as to be moveable within the distance between the grasping units 420 on either side of the index. Once the index is stationary within the adhesive station, and the trays are supported using the counter pressure tool, the roller is then lowered into contact with the top surface and moves linearly across the trays within the index. This linear movement is desirably parallel to the movement of the plastic sheet within the thermoforming machine. As a result of the linear movement, the roller 700 rolls across the rims of the trays and applies adhesive to the said rims. It will be appreciated that the width of the roller is preferably selected for the dimensions of the trays within any one index. Per the present teaching specific rollers can be exchanged depending on the nature of the trays being thermoformed. In this way the adhesive applicator head can be configured to facilitate changing of the head itself or components of the applicator head such as the roller.

It will be understood that this flexibility is advantageous as for example wider thermoforming tools will require a longer roller(s) to apply adhesive to the rims of all the trays. Likewise, narrower thermoforming tools will require a shorter roller(s) to coat all the trays. One long roller(s) of maximum length for the thermoforming machine could in theory coat all trays from all mould sizes but this would require the same sheet width to be used for all. For narrow tools this would involve significant material waste between the mould and the chain rails. It is for this reason that an adhesive applicator per the present teaching may be configured to allow different sized roller coating tooling with different length rollers to be utilised for different mould sizes.

Per conventional use of rollers, the adhesive that is applied within the context of the present teaching is heated to achieve a liquid or molten state. To effect this, the roller coater 700 must be heated such that the adhesive is presented in a molten state to the rims of the trays. In one aspect, electrical cartridge heaters are provided. These can be fitted within the coater frame to heat the coater and roll(s). In another embodiment hot oil may be circulated through the roller(s) and in other embodiments Infra-Red heaters may irradiate the roller(s) surface to maintain temperature.

In a further embodiment hot air can be used to heat the roller surface. It will be understood that the use of hot air within an inline process is particularly advantageous given the limited space that is available within the modular adhesive application station per the present teaching. The use of air is also particularly beneficial in the context of food grade packaging where it is important that the container and its adhesive does not provide any potential contaminants into the process. The use of an air blower also enables tool changings as the air temperature can be changed to effect a cooling of the roller to facilitate an exchange of a first roller for a second roller. It will be appreciated that the direction and pressure of the air as blown onto the roller need to be judiciously selected to ensure that adhesive is not blown off a roller.

It will be understood that the upper station 850 is configured to allow movement of the roller coater 700 to quickly lower the roller to make contact with the rims of the trays (Figure 9) once the sheet is stationary and quickly raise to clear the trays before the sheet indexes to the next station (Figure 8).

The roller coater must be able to move in a linear direction whilst in contact with the flange so as to allow it to roll across the rims of the trays, thus applying adhesive to their surface. At the same time, the roller coater must be capable of rotating the roller at a speed equal to the linear speed of travel across the rims of the trays. To improve the quality of transfer of adhesive from the roller to the surface of the trays being coated, it has been found that the roller should advantageously be rotated at a speed offset which is greater or less than the liner speed of travel across the rims of the trays. When coating in a single direction at typical thermoforming throughputs ranging from 10 cycles per min (cpm) to 30 cpm the linear speed of the roller coater during adhesive application is typically in the range 233mm/s to 466mm/s. In a unidirectional coating configuration-such as achieved using a single roller applicator that applies adhesive when travelling in the direction of the indexed trays through the machine, the return speeds (i.e. the speed of the head when not coating adhesive) are typically 233mm/s to 1400mm/s respectively.

Figure 10 is a side view of an example of a thermoforming machine, similar in structure to the schematic of Figure 4 incorporating an adhesive coating station 600 provided inline between the forming station 130 and the cutting station 140. For the ease of explanation, the components that are within the forming station and the cutting station are omitted.

The adhesive coating station 600 defines a region within which an adhesive applicator 1000 is operable to effect the application of adhesive onto the contact surfaces of the trays within the index of trays that is located within the station. The applicator in this example comprises a single unit that is movable within the adhesive coating station. In this example, the applicator 1000 is mounted to a frame 1005 of the thermoforming machine and is movable along the frame such that the entire applicator 1000 is movable from left to right within the thermoformer 110. In this way it can be moved so as to be aligned with a predetermined optimal coating location for different tools. For example, from a common centralised position the entire adhesive applicator 1000 may need to move left by 200mm to find a full index of trays from Tool A and might likewise need to move 320mm to the right to find a full index of trays from Tool B. It will be appreciated that these values are illustrative and not limiting

In this example, the applicator 1000 comprises an upper station 850 that includes an adhesive applicator head 1010 that is moveable and configured to selectively apply adhesive to the flange contact surface of each tray/ container of the plurality of containers 430 that are being transported through the machine 110 in an engaged sheet that is travelling in a common plane through each station of the machine.

In this same example, the applicator 1000 comprises the lower station 860 that includes the counter pressure tool 800 providing the pivot plates that are moveable upwardly and configured to selectively support individual trays within the sheet of material that is currently located within the station. Whilst supported, the adhesive can be applied to the flange contact surface of each container.

It will be appreciated that per the present teaching there are components of the adhesive applicator 1000 that move upwardly to support the tray, and downwardly to apply the adhesive to the supported trays. In this way the movement of the components of the upper station 850 and lower station 860 are coordinated relative to one another.

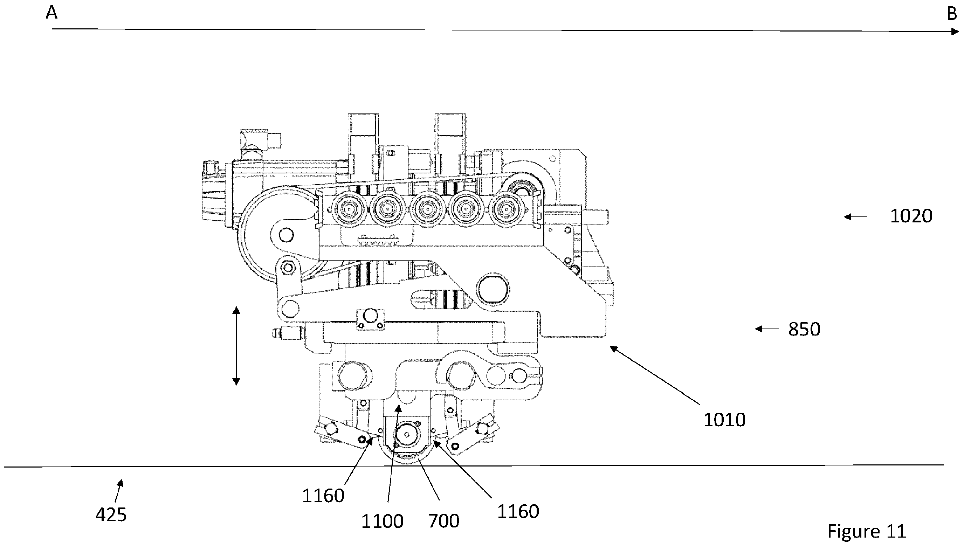

In the example of Figure 10, and as shown in more detail in Figure 11, the adhesive applicator head 1010 of this embodiment utilises a single roller 700.

At the start of any adhesive application cycle, the applicator head is located coincident with location A and the roller 700 is disposed away from the surface of the tray- as outlined in the schematic of Figure 8A. The individual counter pressure plates that were described with reference to Figure 8A are moved upwardly within the lower station 860 of the machine to contact and support their respective trays within the index 430 - it will be appreciated that the travel of the trays in this example through the entirety of the machine is from left to right- as indicated by the arrows in Figure 10.

Coincident with the movement of the lower station 860 upwardly to effect engagement with the trays, the applicator head 1010, within the upper station, travels downwardly to effect contact of the roller 700 with the flange 425.

Having made contact- per Figure 9-, the applicator head 1010 then travels in a direction from A to B dispensing adhesive onto the surfaces of the container. Whilst the applicator head 1010 is travelling and applying adhesive, the index of trays is stationary within the adhesive application station. The roller 700 is, during this configuration in contact with the surfaces, as was shown in the schematic of Figure 9.

At the end of any one pass across the surface of the containers, the adhesive applicator head 1010 will move upwardly away from the container flange surfaces, to adopt the configuration of Figure 8B. At the same time the counter pressure plates of the lower station 860 will move downwardly to disengage from their supported flange. The index of trays can then move onwardly within the machine to the next station, for example the cutting station. As this index of trays is connected to the index of trays behind it, that movement out of the adhesive application station causes the entry of the next index of trays into the adhesive application station.

During this continued travel of indexed trays through the thermoforming machine, the adhesive applicator head 1010 will then move in the opposite direction - from B to A- to return to the start of the adhesive cycle. By this time the next index of trays will be located within the adhesive application station and the process can continue again.

The movement of the adhesive applicator head is, in this exemplary embodiment, effected using a drive means 1020 that uses a cam connected to a servomotor by means of a toothed belt to execute this movement of the adhesive applicator head 1010. Other embodiments may use a servomotor, liner axis, pneumatic ram or other common methods of raising and lowering a piece of apparatus. The drive means is configured to ensure that the adhesive applicator head can move in a linear direction which is parallel with the plane of the plastic sheet 430 that is being thermoformed.

During the movement of the adhesive applicator head from A to B, the adhesive roller itself will also rotate, preferably in a clockwise direction, to effect an application of the adhesive onto the surfaces 425. As will be appreciated by those of ordinary skill, the roller is charged with adhesive from an adhesive reservoir via a roller 1100, and excess adhesive can be removed from the surface using one or more doctor blades 1160.

It will be appreciated that the function of the doctor blades 1160 is to provide a means of regulating the adhesive lay down weight. In this example the doctor blades are mounted on the adhesive head 1010 are their position is controlled by a pneumatic cylinder for ease of operation and control. Other arrangements could use a fixed blade, a manually adjustable blade or a blade controlled by a servomotor.

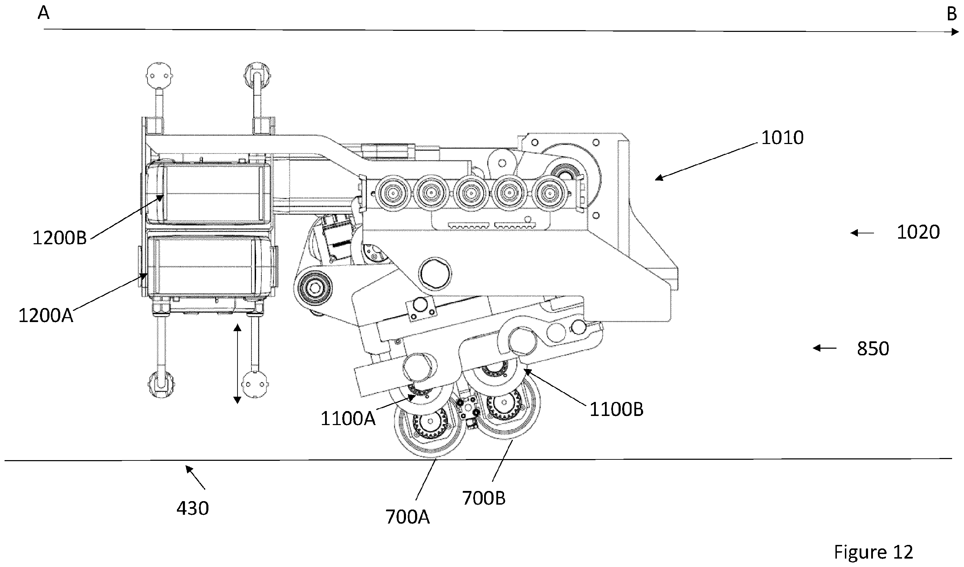

In a variation to the adhesive application technique using the adhesive applicator head 1010 of Figure 10 and 11 that utilises a single roller 700, Figures 12 to 14 show an example of an adhesive applicator head that uses first 700A, and second 700B rollers that are arranged relative to one another such that the adhesive coating can be applied bidirectionally.

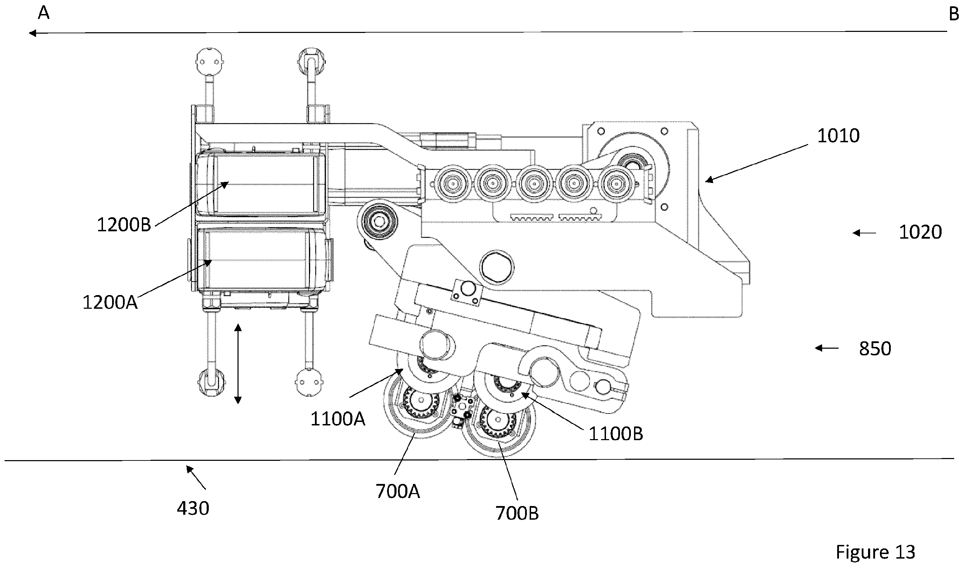

In this way and as shown in Figure 12, a first roller 700A can be used to effect an adhesive coating during travel of the applicator head in the direction A to B of Figure 10, whereas the second roller 700B can be used to effect an adhesive coating during travel of the applicator head in the direction B to A, Figure 13.

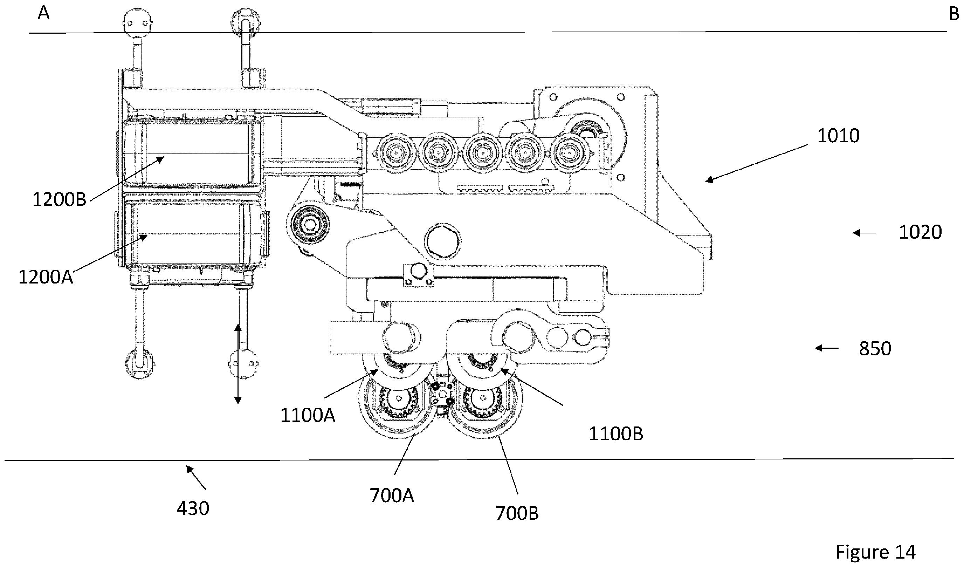

To preferentially effect use of either the first or second rollers to adopt an active adhesive application process, it is necessary that the rollers are pivotable or otherwise moveable relative to one another within the applicator head 1010. When neither are active, then the rollers can each adopt a common plane- for example the orientation shown in Figure 14- where each are disposed away from the common plane of the plastic sheet 42

In contrast to the arrangement of Figures 10 and 11 where adhesive was only applied when the adhesive applicator head was travelling in one direction, the use of a dual roller configuration allows coating to be done in both directions. At typical thermoforming throughputs ranging from 10cpm to 40cpm, the linear speed of the roller coater during adhesive application is typically 280mm/s to 700mm/s.

When coating bi-directionally using the two-roller configuration it will be appreciated that optimally each of the two rollers 700A, 700B are arranged such that they can independently rotate relative to one another. In other configurations, movement of the first roller can induce a dependent movement on the second roller or each are coupled to a common drive that effects concurrent movement of each. Preferably each of the two rollers are arranged such that they are counter rotating rollers. Desirably the roller 700A that provides an application of adhesive when the adhesive applicator head is travelling from left to right (from A-B per Figure 12) will rotate in a clockwise direction, whereas the rotation of the roller that applies adhesive then the adhesive applicator head is travelling from right to left (from B to A per Figure 13) will rotate counter clockwise. To selectively present the first 700A or second 700B roller to the surface of the sheet being coated with an adhesive, the rollers are desirably mounted on a pivotable roller coater head. This can be provided for example by two cams (or one large cam movement that is + and - which can also adopt a mean or neutral position) to allow each roller in turn to lower into the coating position when necessary to coat the trays and raise above the coating position when not in use.

It will be appreciated that normally when one roller is lowered the other roller is raised. The clockwise rotating roller is used to coat the trays with adhesive as the roller coater travels from left to right along its linear axis. Once the complete index of trays is coated the linear travel stops and the roller lifts. Simultaneously (to avoid delay) the second roller lowers into coating position. The second roller turning counter clockwise will coat the trays with adhesive as the roller coater travels from right to left along its linear axis. When the end of its liner travel is reached it will raise and the first roller will lower, thus completing one complete cycle of the coating station. It will be appreciated that this equates to two complete cycles of the Thermoforming Machine.

Per the example of Figures 12 to 14 each of the two rollers are in fluid communication with two independent adhesive reservoirs 1200A, 1200B. In another arrangement, not shown, the two independent rollers share a common adhesive reservoir.

In contrast to the use of the doctor blade per the single roller example, when using a dual roller configuration, the adhesive lay down weight can be determined and regulated by adjusting the gap and pressure between the two dependant counter rotating rollers.

In each of the configurations shown in Figures 8 and 11, the adhesive applicator head is shown in a non- adhesive application configuration where the rollers are located a safe position above plastic sheet and the chain rails 420 which are engaging the sheet 430. This allows the rails to be moved in and out for tool changes. It will be appreciated that this parked position is also advantageous in that the adhesive head 1010 can be moved to this parked position where it is safe to heat up and cool down during times when it is not required, such as when thermoforming production does not require adhesive to be applied to the rims.

Whilst not shown in the schematics, the adhesive coating station may also have a drip tray to collect adhesive drips when the roller coater is heating or cooling and the roller(s) may not be rotating. The drip tray should be mounted above the chain rails and must be retractable during continuous operation. This can be effected by means of a tray mounted on a frame that is in turn running on two linear guides. The tray assembly can be connected to a pneumatic cylinder that in turn is energised by a signal to a solenoid valve. The signal is programmed to be activated when the roller coater reaches its Park position.

It will be appreciated that exemplary embodiment of a thermoforming machine that comprises an adhesive coating station provided inline between a forming station and a cutting station have been described. The adhesive coating station comprises an adhesive applicator which is configured to selectively apply adhesive to a flange contact surface of a plurality of containers being thermoformed from a plastic sheet that is travelling within the machine. At all times when the sheet is travelling within the machine it is continuous gripped by the drive mechanism of the machine. The adhesive is applied when the containers are formed but still retained within the sheet. Subsequent to the application of the adhesive onto flange contact surfaces of the containers, the sheet is then transported to a cutting station where once stationary again, the trays are cut from the sheet yet held in place for the final transport into the stacking station during the next indexing stage of the process.

It will be understood that stacked trays can exit the machine by means of Robot, conveyor, chute etc. where they can then be bagged (manually or automatically) and boxed or palletised for storage and distribution.

## Claims

1. A thermoforming machine comprising:
a heating station for heating a sheet of thermoplastic material;
a forming station comprising a plurality of moulds for forming a plurality of containers, each mould being configured for forming a portion of said heated sheet into a container, each container having a flange contact surface at a top portion of the container;
a cutting station for effecting a separation of the plurality of containers from the sheet of thermoplastic material;
a continuous drive mechanism configured to engage with the sheet of thermoplastic material at first and second sides thereof, the continuous drive mechanism being configured to transport an engaged sheet of thermoplastic material from the heating station, through the forming station and to the cutting station; and wherein the thermoforming machine further comprises:
an adhesive coating station provided inline between the forming station and the cutting station, the adhesive coating station comprising an adhesive applicator configured to selectively apply adhesive to the flange contact surface of each container of the plurality of containers, wherein the adhesive applicator comprises an adhesive applicator head that is moveable within the adhesive coating station,
**characterized in that** the adhesive applicator head is comprising at least one roller; and
wherein the continuous drive mechanism is configured to transport an engaged sheet in a common plane through each station of the machine and the at least one roller is provided on the moveable adhesive applicator head, the moveable adhesive applicator head being configured to move within the adhesive coating station in a linear direction parallel to a direction of transport of the engaged sheet of thermoplastic material to effect application of adhesive by the roller to each flange of the plurality of containers within the adhesive coating station,.

2. The thermoforming machine of claim 1 wherein the common plane is a horizontal plane.

3. The thermoforming machine of any preceding claim wherein the adhesive coating station comprises a counter pressure tool configured to support and locate individual containers during application of the adhesive to the flange contact surface of each container of the plurality of containers.

4. The thermoforming machine of claim 3 wherein the counter pressure tool is moveable relative to the engaged sheet.

5. The thermoforming machine of claim 3 wherein the counter pressure tool is moveable in a direction perpendicular to the common plane.

6. The thermoforming machine of claim 5 wherein the counter pressure tool is configured to move upwardly to support each container of the plurality of containers.

7. The thermoforming machine of claim 6 wherein the counter pressure tool is dimensioned to engage with and support each container of the plurality of containers under the flange contact surface.

8. The thermoforming machine of claim 7 wherein the counter pressure tool comprises a plurality of pitch plates, the pitch plates being moveable in both an X and Y plane to accommodate variations in a location of the plurality of containers, optionally wherein the counter pressure tool further comprises counter pressure plates, the counter pressure plates being spring mounted to the pitch plates, the containers being operatively supported on surfaces of the counter pressure plates.

9. The thermoforming machine of any preceding claim wherein the at least one roller is dimensioned to effect an application of adhesive to each flange of the plurality of containers in a single pass across the plurality of containers.

10. The thermoforming machine of any preceding claim wherein the moveable adhesive applicator head is moveable in a direction transverse to the common plane so as to selectively move the at least one roller from a non-operating mode wherein the at least one roller is spaced away from plurality of containers to an operating mode wherein the at least one roller is brought into intimate contact with the plurality of containers.

11. The thermoforming machine of any preceding claim wherein the roller is rotatable relative to the moveable adhesive applicator head.

12. The thermoforming machine of preceding claim wherein the adhesive applicator head comprises first and second rollers, the adhesive applicator head being configured to selectively use one of the first and second rollers to apply adhesive, optionally wherein the adhesive applicator head is configured to selectively use a first roller during application of adhesive in a first direction of travel of the adhesive applicator head, and to use a second roller during application of adhesive in a second direction of travel of the adhesive applicator head, the first direction being opposite to the second direction.

13. The thermoforming machine of claim 12 wherein the first and second rollers are configured to rotate in contrary directions to one another, optionally configured such that an adhesive lay down weight is determined and regulated by adjusting a gap and pressure between the first and second rollers.

14. The thermoforming machine of any one of claims 12 to 13 wherein each of the first and second rollers are pivotable relative to one another to allow selective presentation of each of the first and second rollers to a surface to be coated with adhesive.

15. The thermoforming machine of any preceding claim wherein the adhesive applicator is movable within the adhesive coating station in a direction parallel with a direction of transport of the engaged sheet of thermoplastic material, and wherein the adhesive applicator is mounted to a frame of the thermoforming machine, the adhesive applicator being movable along the frame to operatively align the adhesive applicator with the plurality of containers located within the adhesive coating station.

## Patentansprüche

1. Eine Thermoformmaschine, die Folgendes beinhaltet:
eine Heizstation zum Erhitzen einer Bahn aus thermoplastischem Material;
eine Formstation, die eine Vielzahl von Gussformen zum Formen einer Vielzahl von Behältern beinhaltet, wobei jede Gussform so konfiguriert ist, dass sie einen Abschnitt der erhitzten Bahn zu einem Behälter formt, wobei jeder Behälter eine Flanschkontaktoberfläche an einem oberen Abschnitt des Behälters aufweist;
eine Schneidestation zum Herbeiführen einer Trennung der Vielzahl von Behältern von der Bahn aus thermoplastischem Material;
einen kontinuierlichen Antriebsmechanismus, der so konfiguriert ist, dass er mit der Bahn aus thermoplastischem Material an einer ersten und einer zweiten Seite davon in Eingriff gebracht wird, wobei der kontinuierliche Antriebsmechanismus so konfiguriert ist, dass er eine in Eingriff gebrachte Bahn aus thermoplastischem Material von der Heizstation durch die Formstation und zu der Schneidestation transportiert; und
wobei die Thermoformmaschine ferner Folgendes beinhaltet:
eine Klebstoffbeschichtungsstation, die in Reihe zwischen der Formstation und der Schneidestation bereitgestellt wird, wobei die Klebstoffbeschichtungsstation einen Klebstoffapplikator beinhaltet, der so konfiguriert ist, dass er selektiv Klebstoff auf die Flanschkontaktoberfläche jedes Behälters der Vielzahl von Behältern appliziert, wobei der Klebstoffapplikator einen Klebstoffapplikatorkopf beinhaltet, der innerhalb der Klebstoffbeschichtungsstation bewegbar ist,
**dadurch gekennzeichnet, dass** der Klebstoffapplikatorkopf mindestens eine Walze beinhaltet; und
wobei der kontinuierliche Antriebsmechanismus so konfiguriert ist, dass er eine in Eingriff gebrachte Bahn in einer gemeinsamen Ebene durch jede Station der Maschine transportiert und die mindestens eine Walze an dem beweglichen Klebstoffapplikatorkopf bereitgestellt ist, wobei der bewegliche Klebstoffapplikatorkopf so konfiguriert ist, dass er sich innerhalb der Klebstoffbeschichtungsstation in einer linearen Richtung parallel zu einer Transportrichtung der in Eingriff gebrachte Bahn aus thermoplastischem Material bewegt, um eine Applikation des Klebstoffs durch die Walze auf jeden Flansch der Vielzahl von Behältern innerhalb der Klebstoffbeschichtungsstation herbeizuführen.

2. Thermoformmaschine gemäß Anspruch 1, wobei die gemeinsame Ebene eine horizontale Ebene ist.

3. Thermoformmaschine gemäß einem der vorhergehenden Ansprüche, wobei die Klebstoffbeschichtungsstation ein Gegendruckwerkzeug beinhaltet, das so konfiguriert ist, dass es einzelne Behälter während der Applikation des Klebstoffs auf die Flanschkontaktoberfläche jedes Behälters der Vielzahl von Behältern unterstützt und positioniert.

4. Thermoformmaschine gemäß Anspruch 3, wobei das Gegendruckwerkzeug relativ zu der in Eingriff gebrachten Bahn beweglich ist.

5. Thermoformmaschine gemäß Anspruch 3, wobei das Gegendruckwerkzeug in einer Richtung senkrecht zu der gemeinsamen Ebene bewegbar ist.

6. Thermoformmaschine gemäß Anspruch 5, wobei das Gegendruckwerkzeug so konfiguriert ist, dass es sich nach oben bewegt, um jeden Behälter der Vielzahl von Behältern zu stützen.

7. Thermoformmaschine gemäß Anspruch 6, wobei das Gegendruckwerkzeug so bemessen ist, dass es in jeden Behälter der Vielzahl von Behältern unter der Flanschkontaktoberfläche eingreift und diesen stützt.

8. Thermoformmaschine gemäß Anspruch 7, wobei das Gegendruckwerkzeug eine Vielzahl von Teilungsplatten beinhaltet, wobei die Teilungsplatten sowohl in einer X- als auch in einer Y-Ebene beweglich sind, um Variationen in einer Position der Vielzahl von Behältern aufzunehmen, wobei das Gegendruckwerkzeug optional ferner Gegendruckplatten beinhaltet, wobei die Gegendruckplatten an den Teilungsplatten gefedert sind, wobei die Behälter auf Oberflächen der Gegendruckplatten funktionsfähig gestützt sind.

9. Thermoformmaschine gemäß einem der vorhergehenden Ansprüche, wobei die mindestens eine Walze so bemessen ist, dass sie eine Klebstoffapplikation auf jeden Flansch der Vielzahl von Behältern in einem einzigen Durchgang über die Vielzahl von Behältern herbeiführt.

10. Thermoformmaschine gemäß einem der vorhergehenden Ansprüche, wobei der bewegliche Klebstoffapplikatorkopf in einer Richtung quer zu der gemeinsamen Ebene bewegbar ist, um die mindestens eine Walze selektiv von einem Nichtbetriebsmodus, in dem die mindestens eine Walze von einer Vielzahl von Behältern beabstandet ist, in einen Betriebsmodus zu bewegen, in dem die mindestens eine Walze in engen Kontakt mit der Vielzahl von Behältern gebracht wird.

11. Thermoformmaschine gemäß einem der vorhergehenden Ansprüche, wobei die Walze relativ zu dem beweglichen Klebstoffapplikatorkopf drehbar ist.

12. Thermoformmaschine gemäß dem vorhergehenden Anspruch, wobei der Klebstoffapplikatorkopf eine erste und eine zweite Walze beinhaltet, wobei der Klebstoffapplikatorkopf so konfiguriert ist, dass er selektiv eine von der ersten und der zweiten Walze zur Applikation von Klebstoff verwendet, wobei der Klebstoffapplikatorkopf optional so konfiguriert ist, dass er selektiv eine erste Walze während der Applikation von Klebstoff in einer ersten Bewegungsrichtung des Klebstoffapplikatorkopfes verwendet und eine zweite Walze während der Applikation von Klebstoff in einer zweiten Bewegungsrichtung des Klebstoffapplikatorkopfes verwendet, wobei die erste Richtung gegenüberliegend zu der zweiten Richtung ist.

13. Thermoformmaschine gemäß Anspruch 12, wobei die erste und die zweite Walze so konfiguriert sind, dass sie sich in entgegengesetzten Richtungen zueinander drehen, optional so konfiguriert sind, dass ein Klebstoffablagegewicht durch Einstellen eines Spalts und Drucks zwischen der ersten und der zweiten Walze bestimmt und reguliert wird.

14. Thermoformmaschine gemäß einem der Ansprüche 12 bis 13, wobei die erste und die zweite Walze jeweils relativ zueinander schwenkbar sind, um eine selektive Präsentation der ersten und der zweiten Walze auf einer mit Klebstoff zu beschichtenden Oberfläche zu ermöglichen.

15. Thermoformmaschine gemäß einem der vorhergehenden Ansprüche, wobei der Klebstoffapplikator innerhalb der Klebstoffbeschichtungsstation in einer Richtung parallel zu einer Transportrichtung der in Eingriff gebrachten Bahn aus thermoplastischem Material bewegbar ist, und wobei der Klebstoffapplikator an einem Rahmen der Thermoformmaschine angebracht ist, wobei der Klebstoffapplikator entlang des Rahmens bewegbar ist, um den Klebstoffapplikator funktionsfähig mit der Vielzahl von Behältern auszurichten, die innerhalb der Klebstoffbeschichtungsstation positioniert ist.

## Revendications

1. Une machine de thermoformage comprenant :
un poste de chauffage servant au chauffage d'une feuille de matériau thermoplastique ;
un poste de formage comprenant une pluralité de moules servant à la formation d'une pluralité de contenants, chaque moule étant configuré pour la formation d'une portion de ladite feuille chauffée en un contenant, chaque contenant ayant une surface de contact de rebord au niveau d'une portion supérieure du contenant ;
un poste de coupe servant à la réalisation d'une séparation de la pluralité de contenants de la feuille de matériau thermoplastique ;
un mécanisme d'entraînement continu configuré pour entrer en prise avec la feuille de matériau thermoplastique au niveau de premier et deuxième côtés de celle-ci, le mécanisme d'entraînement continu étant configuré pour transporter une feuille de matériau thermoplastique en prise à partir du poste de chauffage, à travers le poste de formage et jusqu'au poste de coupe ; et
où la machine de thermoformage comprend en outre :
un poste de revêtement d'adhésif prévu en ligne entre le poste de formage et le poste de coupe, le poste de revêtement d'adhésif comprenant un applicateur d'adhésif configuré pour appliquer sélectivement de l'adhésif sur la surface de contact de rebord de chaque contenant de la pluralité de contenants, où l'applicateur d'adhésif comprend une tête d'applicateur d'adhésif qui est déplaçable au sein du poste de revêtement d'adhésif,
**caractérisée en ce que** la tête d'applicateur d'adhésif comprend au moins un rouleau ; et
où le mécanisme d'entraînement continu est configuré pour transporter une feuille en prise dans un plan commun à travers chaque poste de la machine et l'au moins un rouleau est prévu sur la tête d'applicateur d'adhésif déplaçable, la tête d'applicateur d'adhésif déplaçable étant configurée pour se déplacer au sein du poste de revêtement d'adhésif dans une direction linéaire parallèle à une direction de transport de la feuille de matériau thermoplastique en prise afin de réaliser l'application d'adhésif par le rouleau sur chaque rebord de la pluralité de contenants au sein du poste de revêtement d'adhésif.

2. La machine de thermoformage de la revendication 1 où le plan commun est un plan horizontal.

3. La machine de thermoformage de n'importe quelle revendication précédente où le poste de revêtement d'adhésif comprend un outil de contre-pression configuré pour soutenir et situer des contenants individuels pendant l'application de l'adhésif sur la surface de contact de rebord de chaque contenant de la pluralité de contenants.

4. La machine de thermoformage de la revendication 3 où l'outil de contre-pression est déplaçable relativement à la feuille en prise.

5. La machine de thermoformage de la revendication 3 où l'outil de contre-pression est déplaçable dans une direction perpendiculaire au plan commun.

6. La machine de thermoformage de la revendication 5 où l'outil de contre-pression est configuré pour se déplacer vers le haut afin de supporter chaque contenant de la pluralité de contenants.

7. La machine de thermoformage de la revendication 6 où l'outil de contre-pression est dimensionné pour entrer en prise avec chaque contenant de la pluralité de contenants et le soutenir sous la surface de contact de rebord.

8. La machine de thermoformage de la revendication 7 où l'outil de contre-pression comprend une pluralité de plaques de tangage, les plaques de tangage étant déplaçables tant dans le plan X que dans le plan Y afin de s'adapter à des variations d'une situation de la pluralité de contenants, facultativement où l'outil de contre-pression comprend en outre des plaques de contre-pression, les plaques de contre-pression étant montées avec des ressorts aux plaques de tangage, les contenants étant soutenus de manière fonctionnelle sur des surfaces des plaques de contre-pression.

9. La machine de thermoformage de n'importe quelle revendication précédente où l'au moins un rouleau est dimensionné pour réaliser une application d'adhésif sur chaque rebord de la pluralité de contenants en un seul passage sur la pluralité de contenants.

10. La machine de thermoformage de n'importe quelle revendication précédente où la tête d'applicateur d'adhésif déplaçable est déplaçable dans une direction transversale au plan commun de façon à déplacer sélectivement l'au moins un rouleau d'un mode de non fonctionnement où l'au moins un rouleau est écarté de la pluralité de contenants jusqu'à un mode de fonctionnement où l'au moins un rouleau est amené en contact étroit avec la pluralité de contenants.

11. La machine de thermoformage de n'importe quelle revendication précédente où le rouleau est rotatif relativement à la tête d'applicateur d'adhésif déplaçable.

12. La machine de thermoformage de la revendication précédente où la tête d'applicateur d'adhésif comprend des premier et deuxième rouleaux, la tête d'applicateur d'adhésif étant configurée pour utiliser sélectivement un rouleau parmi les premier et deuxième rouleaux afin d'appliquer de l'adhésif, facultativement où la tête d'applicateur d'adhésif est configurée pour utiliser sélectivement un premier rouleau pendant l'application d'adhésif dans un premier sens de course de la tête d'applicateur d'adhésif, et pour utiliser un deuxième rouleau pendant l'application d'adhésif dans un deuxième sens de course de la tête d'applicateur d'adhésif, le premier sens étant opposé au deuxième sens.

13. La machine de thermoformage de la revendication 12 où les premier et deuxième rouleaux sont configurés pour être en rotation dans des sens contraires l'un à l'autre, facultativement configurés de telle sorte qu'un poids de pose d'adhésif est déterminé et régulé par réglage d'un écart et d'une pression entre les premier et deuxième rouleaux.

14. La machine de thermoformage de n'importe laquelle des revendications 12 à 13 où les premier et deuxième rouleaux sont chacun pivotants l'un relativement à l'autre afin de permettre une présentation sélective de chaque rouleau parmi les premier et deuxième rouleaux à une surface devant être revêtue d'adhésif.

15. La machine de thermoformage de n'importe quelle revendication précédente où l'applicateur d'adhésif est déplaçable au sein du poste de revêtement d'adhésif dans une direction parallèle à une direction de transport de la feuille de matériau thermoplastique en prise, et où l'applicateur d'adhésif est monté sur un châssis de la machine de thermoformage, l'applicateur d'adhésif étant déplaçable le long du châssis afin d'aligner de manière fonctionnelle l'applicateur d'adhésif avec la pluralité de contenants situés au sein du poste de revêtement d'adhésif.
